# EUROPEAN PATENT SPECIFICATION

(11) **EP 2 006 567 B1**
(45) Date of publication and mention of the grant of the patent: **13.09.2017**
(21) Application number: 08157071.5
(22) Date of filing: 28.05.2008
(51) Int. Cl.: F16F 9/06

(54) **Gas cup assembly and damper having same**
Trennkolben-Zusammenbau und Dämpfer mit einem solchen Zusammenbau
Montage de piston séparateur et amortisseur en disposant

(30) Priority: 20.06.2007 US 936550 P; 24.04.2008 US 150010
(43) Date of publication of application: 24.12.2008
(73) Proprietor: BWI Company Limited S.A., 1628 Luxembourg (LU)
(72) Inventor: Lun, Saiman, Centerville, OH 45458 (US)
(74) Representative: Fox-Male, Nicholas Vincent Humbert

(56) References cited:
- DE-B3- 10 350 431
- GB-A- 1 206 752
- GB-A- 2 073 846
- US-A- 3 101 131
- US-A1- 2002 130 002
- US-A1- 2004 182 661

## Description

### TECHNICAL FIELD

The present invention relates generally to piston dampers, and more particularly to a damper having a gas cup assembly and to a gas cup assembly for a damper.

### BACKGROUND OF THE INVENTION

Conventional piston dampers include dampers having a tube, a piston assembly (such as a piston assembly including a piston core and a piston ring positioned outward of the piston core to define a through passageway between the piston core and the piston ring), and a piston rod. The tube contains a damping fluid. The piston assembly slideably engages the tube between the closed and open end portions of the tube. The piston rod has a first end portion attached to the piston assembly and a second end portion extending outside the open end portion of the tube. A rod guide assembly is attached to the open end portion of the tube to guide the piston rod and to seal the damping fluid within the tube. A floating, hermetically-sealing gas cup (such as one made of impermeable aluminum) slidingly engages the tube to separate the damping fluid from a gas and slides (floats) to adjust for the volume change caused by the moving piston rod, thermal expansion of the damping fluid, and normal loss of damping fluid, as is known to those skilled in the art. The gas cup has a single seal disposed in fully-circumferential surface groove on the outwardly-facing circumferential surface of the gas cup.

Conventional piston dampers include magnetorheological (MR) dampers having MR damping fluid and non-MR dampers having non-MR damping fluid (such as hydraulic fluid). The MR fluid, which typically is hydraulic fluid containing iron particles, passes through an MR passageway (i.e., a magnetically energizable passageway) of the MR piston assembly. Exposing the MR fluid in the MR passageway to a varying magnetic field, generated by providing a varying electric current to an electric coil of the MR piston assembly, varies the damping effect of the MR fluid in the MR passageway providing variably-controlled damping of relative motion between the MR piston assembly and the tube. The electric current is varied (including turning off the electric current) to accommodate varying operating conditions, as is known to those skilled in the art. The seal for the gas cup of a monotube MR damper comes down to a choice of seal materials such as a polyurethane seal (for better abrasion resistance to the typically iron particles in the MR fluid) or an HNBR (Hydrogenated Nitrile Butadiene Rubber) seal (for better high temperature and gas sealing properties). DE 103 50 431 B3 discloses a damper comprising a floating piston made of two elements.

What is needed is an improved gas cup assembly and an improved damper having a gas cup assembly.

### SUMMARY OF THE INVENTION

The present invention is defined by the appended claims.

A first expression of an embodiment of the invention is for a damper including a damper cylinder, a floating damper gas cup assembly, a damping fluid, a gas, a damper piston assembly, a piston rod, and a rod guide assembly. The damper cylinder has a closed end portion and an open end portion. The damper gas cup assembly is disposed in, and is slidingly engagable with, the damper cylinder to create a first chamber extending from the damper gas cup assembly toward the open end portion and a second chamber extending from the damper gas cup assembly toward the closed end portion. The damper gas cup assembly includes a gas-and-liquid-impermeable damper gas cup and a liquid-permeable member. The damper gas cup has a central longitudinal axis and has an outwardly-facing first circumferential surface with a fully-circumferential first surface groove. The first surface groove is adapted to receive a first seal. The member is disposed outside, and is attached to, the damper gas cup and has an outwardly-facing second circumferential surface with a fully-circumferential second surface groove. The second surface groove is adapted to receive a second seal. The damper gas cup has an over-molded attachment to the member and comprises a plastic. The member comprises one of a porous powdered metal and a porous ceramic. The damping fluid is disposed within the first chamber and is in contact with the member. The gas is disposed within the second chamber and is in contact with the damper gas cup. The damper piston assembly is disposed within the first chamber and is slidingly engagable with the damper cylinder. The piston rod has a first end portion which is attached to the damper piston assembly and has a second end portion which extends outside the open end portion of the damper cylinder. The rod guide assembly is attached to the open end portion of the damper cylinder and is adapted to guide the piston rod and to seal the damping fluid within the first chamber.

A second expression of an embodiment of the invention is for a damper gas cup assembly including a gas-and-liquid-impermeable damper gas cup and a liquid-permeable member. The damper gas cup has a central longitudinal axis and has an outwardly-facing first circumferential surface with a fully-circumferential first surface groove. The first surface groove is adapted to receive a first seal. The member is disposed outside, and is attached to, the damper gas cup and has an outwardly-facing second circumferential surface with a fully-circumferential second surface groove. The second surface groove is adapted to receive a second seal.

first seal is disposed in the first surface groove. The second seal is disposed in the second surface groove.

Several benefits and advantages are derived from one or more of the expressions of the embodiment of the invention. In one example, the liquid-permeable member provides an internal fluid path allowing the damping fluid to bypass the second seal which avoids the undesirable pumping action created between the two seals when two seals in series are conventionally employed on a component which is moved against a sealing surface, as can be appreciated by those skilled in the art. In the same or a different example, when the damping fluid is an MR damping fluid containing, for example, abrasive iron particles, the first seal can be a better gas seal than the second seal, and the second seal can be a better abrasion resistant seal then the first seal (rather than conventionally choosing one seal which compromises on meeting all sealing requirements). In this example, the liquid-permeable member will filter out the abrasive particles in the MR damping fluid supplying substantially particle-free damping fluid between the first and second seals providing clean lubrication without exposing the first seal to the abrasive particles, and the first seal will protect the second seal from the abrasive particles which encounter the first seal. This should, in this example, improve the durability of the gas cup assembly and may even allow the design clearance between the damper piston and the damper gas cup to be reduced (resulting in a shorter damper requiring less relatively expensive MR damping fluid), as can be appreciated by those skilled in the art.

### BRIEF DESCRIPTION OF THE DRAWINGS

Figure 1 is a schematic, cross-sectional view of an embodiment of the invention showing a damper which includes a damper gas cup assembly;
Figure 2 is an enlarged cross-sectional view of the damper gas cup assembly of figure 1 removed from the damper of figure 1; and
Figure 3 is a view, as in figure 2 but with the first and second seals removed from the damper gas cup assembly.

### DESCRIPTION OF THE PREFERRED EMBODIMENTS

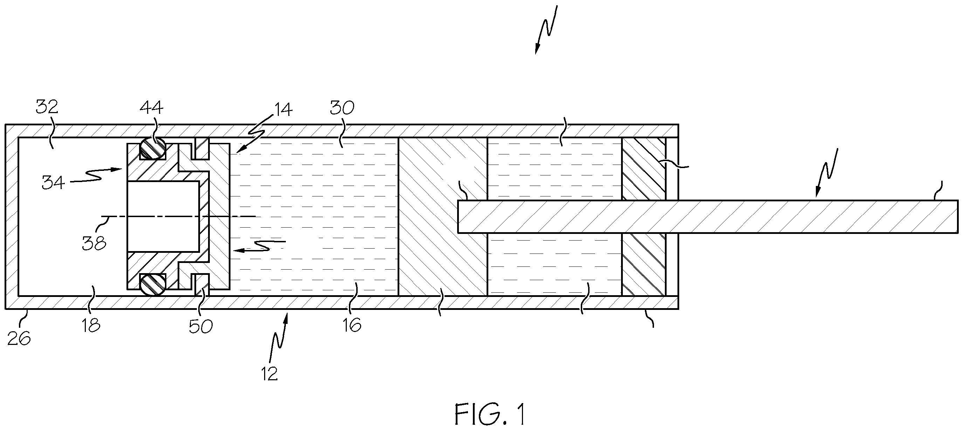

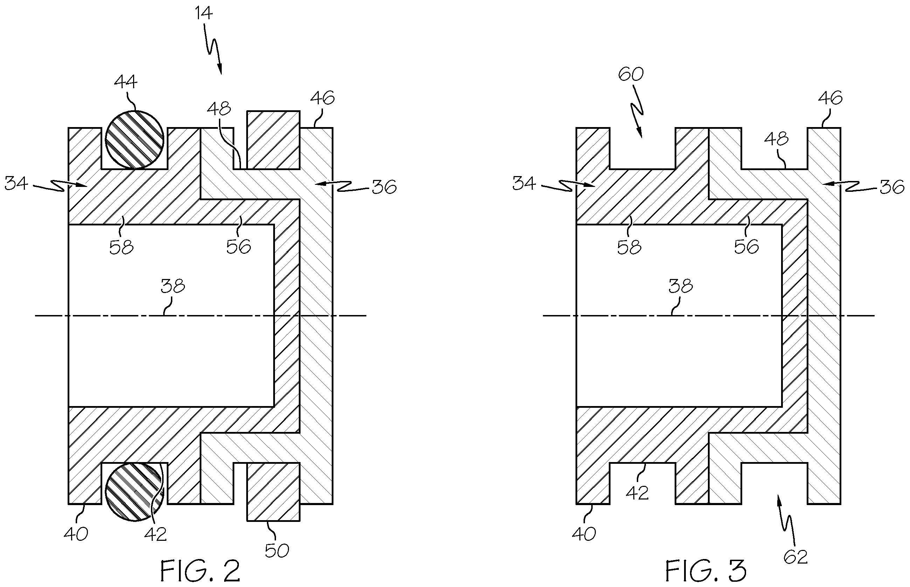

Referring now to the drawings, figures 1-3 show an embodiment of the present invention. A first expression of the embodiment of figures 1-3 is for a damper 10 including a damper cylinder 12, a floating damper gas cup assembly 14, a damping fluid 16, a gas 18, a damper piston assembly 20, a piston rod 22, and a rod guide assembly 24. The damper cylinder 12 has a (monolithic or non-monolithic) closed end portion 26 and an open end portion 28. The damper gas cup assembly 14 is disposed in, and is slidingly engagable with, the damper cylinder 12 to create a first chamber 30 extending from the damper gas cup assembly 14 toward the open end portion 28 and a second chamber 32 extending from the damper gas cup assembly 14 toward the closed end portion 26. The damper gas cup assembly 14 includes a gas-and-liquid-impermeable damper gas cup 34 and a liquid-permeable member 36. The damper gas cup 34 has a central longitudinal axis 38 and has an outwardly-facing first circumferential surface 40 with a fully-circumferential first surface groove 42. The first surface groove 42 is adapted to receive a first seal 44. The member 36 is disposed outside, and is attached to, the damper gas cup 34 and has an outwardly-facing second circumferential surface 46 with a fully-circumferential second surface groove 48. The second surface groove 48 is adapted to receive a second seal 50. The damper gas cup (34) has an over-molded attachment to the member (36) and comprises a plastic. The member (36) comprises one of a porous powdered metal and a porous ceramic. The damping fluid 16 is disposed within the first chamber 30 and is in contact with the member 36. The gas 18 (such as, but not limited to, air) is disposed within the second chamber 32 and is in contact with the damper gas cup 34. The damper piston assembly 20 is disposed within the first chamber 30 and is slidingly engagable with the damper cylinder 12. The piston rod 22 has a first end portion 52 which is attached to the damper piston assembly 20 and has a second end portion 54 which extends outside the open end portion 28 of the damper cylinder 12. The rod guide assembly 24 is attached to the open end portion 28 of the damper cylinder 12 and is adapted to guide the piston rod 22 and to seal the damping fluid 16 within the first chamber 30.

It is noted that the terminology "circumferential surface" is not limited to circular cylindrical surfaces for the purpose of describing any one or more or all of the expressions of the embodiment of figures 1-3. A "circumferential surface" includes, for example and without limitation, a rectangular cylindrical surface. It also is noted that the terminology "slidingly engagable with a damper cylinder" includes a component being directly slidingly engagable with a damper cylinder and a component being indirectly slidingly engagable with a damper cylinder through an intervening seal.

In one enablement of the first expression of the embodiment of figures 1-3, the damper gas cup assembly 14 includes the first seal 44 disposed in the first surface groove 42 and includes the second seal 50 disposed in the second surface groove 48, wherein the first and second seals (44 and 50) each are slidingly engagable with the damper cylinder (12). In one variation, the first and second surface grooves 42 and 48 are substantially coaxially aligned with the longitudinal axis 38.

In one implementation of the enablement, the damping fluid 16 is a magnetorheological (MR) damping fluid, and the first seal 44 is a better gas seal than is the second seal 50. In one variation, the second seal 50 is a better abrasion resistant seal than is the first seal 44. In one choice of materials, the first seal 44 comprises nitrile-butadiene rubber (NBR), and the second seal 50 comprises polyurethane. In one modification, the damper gas cup 34 includes a longitudinally-extending closed bottom portion 56 and a longitudinally extending open top portion 58, wherein the top portion 58 extends outward of the bottom portion 56, and wherein the top portion 58 includes the first surface groove 42. In one arrangement, the member 36 is substantially coaxially aligned with the longitudinal axis 38, surrounds the bottom portion 56, and contacts the top portion 58.

In the same or a different implementation, first surface groove 42 has an outwardly-facing first entrance 60, and the first surface groove 42 completely surrounds the first seal 44 except at the first entrance 60. In the same or a different implementation, the second surface groove 48 has an outwardly-facing second entrance 62, and the second surface groove 48 completely surrounds the second seal 50 except at the second entrance 62.

In a first configuration of the first expression of the embodiment of figures 1-3, each circumferential surface 40 and 46 is a circular cylindrical surface. In the first configuration, each circumferential surface 40 and 46 is a radially-outwardly-facing circumferential surface, the top portion 58 extends radially outward of the bottom portion 56, and the surface grooves 42 and 48 have corresponding radially-outwardly-facing entrances 60 and 62. In one example, not shown, the damper piston assembly 20 includes a piston core and includes a piston ring disposed outward of the piston core to define a through passageway between the piston core and the piston ring. Other examples of damper piston assemblies, including damper piston assemblies having piston seals, are left to those skilled in the art.

A second expression of the embodiment of figures 1-3 is for a damper gas cup assembly 14 including a gas-and-liquid-impermeable damper gas cup 34 and a liquid-permeable member 36. The damper gas cup 34 has a central longitudinal axis 38 and has an outwardly-facing first circumferential surface 40 with a fully-circumferential first surface groove 42. The first surface groove 42 is adapted to receive a first seal 44. The member 36 is disposed outside, and is attached to, the damper gas cup 34 and has an outwardly-facing second circumferential surface 46 with a fully-circumferential second surface groove 48. The second surface groove 48 is adapted to receive a second seal 50. The damper gas cup (34) has an over-molded attachment to the member (36) and comprises a plastic. The member (36) comprises one of a porous powdered metal and a porous ceramic.

It is noted that the enablements, implementations, etc. of the first expression of the embodiment of figures 1-3 are equally applicable to the second expression of the embodiment of figures 1-3. The damper gas cup 34 has an over-molded attachment to the member 36. The damper gas cup 34 comprises a plastic, and the member 36 comprises one of a porous powdered metal and a porous ceramic. In one example, the damper gas cup 34 consists essentially of Nylon 66 with about a thirty-three percent glass fill, and the member 36 consists essentially of porous stainless steel powdered metal.

A third expression of the embodiment of figures 1-3 is for a damper gas cup assembly 14 including a gas-and-liquid-impermeable damper gas cup 34, a liquid-permeable member 36, a first seal 44, and a second seal 50. The damper gas cup 34 has a central longitudinal axis 38 and has an outwardly-facing first circumferential surface 40 with a fully-circumferential first surface groove 42. The member 36 is disposed outside, and is attached to, the damper gas cup 34 and has an outwardly-facing second circumferential surface 46 with a fully-circumferential second surface groove 48. The damper gas cup (34) has an over-molded attachment to the member (36) and comprises a plastic. The member (36) comprises one of a porous powdered metal and a porous ceramic. The first seal 44 is disposed in the first surface groove 42. The second seal 50 is disposed in the second surface groove 48.

It is noted that the enablements, implementations, constructions, examples, etc. of the first and second expressions of the embodiment of figures 1-3 are equally applicable to the third expression of the embodiment of figures 1-3.

Several benefits and advantages are derived from one or more of the expressions of the embodiment of the invention. In one example, the liquid-permeable member provides an internal fluid path allowing the damping fluid to bypass the second seal which avoids the undesirable pumping action created between the two seals when two seals in series are conventionally employed on a component which is moved against a sealing surface, as can be appreciated by those skilled in the art. In the same or a different example, when the damping fluid is an MR damping fluid containing, for example, abrasive iron particles, the first seal can be a better gas seal than the second seal, and the second seal can be a better abrasion resistant seal then the first seal (rather than conventionally choosing one seal which compromises on meeting all sealing requirements). In this example, the liquid-permeable member will filter out the abrasive particles in the MR damping fluid supplying substantially particle-free damping fluid between the first and second seals providing clean lubrication without exposing the first seal to the abrasive particles, and the first seal will protect the second seal from the abrasive particles which encounter the first seal. This should, in this example, improve the durability of the gas cup assembly and may even allow the design clearance between the damper piston and the damper gas cup to be reduced (resulting in a shorter damper requiring less relatively expensive MR damping fluid), as can be appreciated by those skilled in the art.

The foregoing description of several expressions of an embodiment of the invention has been presented for purposes of illustration. It is not intended to be exhaustive or to limit the invention to the precise form disclosed, and obviously many modifications and variations are possible in light of the above teaching. It is intended that the scope of the invention be defined by the claims appended hereto.

## Claims

1. A damper (10) comprising:
a) a damper cylinder (12) having a closed end portion (26) and an open end portion (28);
b) a floating damper gas cup assembly (14) disposed in, and slidingly engagable with, the damper cylinder (12) to create a first chamber (30) extending from the damper gas cup assembly (14) toward the open end portion (28) and a second chamber (32) extending from the damper gas cup assembly (14) toward the closed end portion (26), wherein the damper gas cup assembly (14) includes:
(1) a gas-and-liquid-impermeable damper gas cup (34) having a central longitudinal axis (38) and having an outwardly-facing first circumferential surface (40) with a fully-circumferential first surface groove (42), wherein the first surface groove (42) is adapted to receive a first seal (44); and
(2) a liquid-permeable member (36) disposed outside, and attached to, the damper gas cup (34) and having an outwardly-facing second circumferential surface (46) with a fully-circumferential second surface groove (48), wherein the second surface groove (48) is adapted to receive a second seal (50);
wherein the damper gas cup (34) has an over-molded attachment to the member (36) and comprises a plastic; and
wherein the member (36) comprises one of a porous powdered metal and a porous ceramic;
c) a damping fluid (16) disposed within the first chamber (30) and in contact with the member (36);
d) a gas (18) disposed within the second chamber (32) and in contact with the damper gas cup (34);
e) a damper piston assembly (20) disposed within the first chamber (30) and slidingly engagable with the damper cylinder (12);
f) a piston rod (22) having a first end portion (52) attached to the damper piston assembly (20) and a second end portion (54) extending outside the open end portion (28) of the damper cylinder (12); and
g) a rod guide assembly (24) attached to the open end portion (28) of the damper cylinder (12) and adapted to guide the piston rod (22) and to seal the damping fluid (16) within the first chamber (30).

2. The damper (10) of claim 1, wherein the damper gas cup assembly (14) includes the first seal (44) disposed in the first surface groove (42) and includes the second seal (50) disposed in the second surface groove (48), wherein the first and second seals (44 and 50) each are slidingly engagable with the damper cylinder (12).

3. The damper (10) of claim 2, wherein the damping fluid (16) is a magnetorheological (MR) damping fluid.

4. The damper (10) of claim 3, wherein the first seal (44) comprises nitrile-butadiene rubber, and wherein the second seal (50) comprises polyurethane.

5. The damper (10) of claim 3, wherein the damper gas cup (34) includes a longitudinally-extending closed bottom portion (56) and a longitudinally extending open top portion (58), wherein the top portion (58) extends outward of the bottom portion (56), and wherein the top portion (58) includes the first surface groove (42).

6. The damper (10) of claim 5, wherein the member (36) is substantially coaxially aligned with the longitudinal axis (38), surrounds the bottom portion (56), and contacts the top portion (58).

7. The damper (10) of claim 2, wherein first surface groove (42) has an outwardly-facing first entrance (60), and wherein the first surface groove (42) completely surrounds the first seal (44) except at the first entrance (60).

8. The damper (10) of claim 2, wherein second surface groove (48) has an outwardly-facing second entrance (62), and wherein the second surface groove (48) completely surrounds the second seal (50) except at the second entrance (62).

9. A damper gas cup assembly (14) comprising:
a) a gas-and-liquid-impermeable damper gas cup (34) having a central longitudinal axis (38) and having an outwardly-facing first circumferential surface (40) with a fully-circumferential first surface groove (42), wherein the first surface groove (42) is adapted to receive a first seal (44); and
b) a liquid-permeable member (36) disposed outside, and attached to, the damper gas cup (34) and having an outwardly-facing second circumferential surface (46) with a fully-circumferential second surface groove (48), wherein the second surface groove (48) is adapted to receive a second seal (50);
wherein the damper gas cup (34) has an over-molded attachment to the member (36) and comprises a plastic; and
wherein the member (36) comprises one of a porous powdered metal and a porous ceramic.

10. The damper gas cup assembly (14) of claim 9, comprising:
c) a first seal (44) disposed in the first surface groove (42); and
d) a second seal (50) disposed in the second surface groove (48).

11. The damper gas cup assembly (14) of claim 10, comprising a magnetorheological (MR) damping fluid.

12. The damper gas cup assembly (14) of claim 11, wherein the first seal (44) comprises nitrile-butadiene rubber, and wherein the second seal (50) comprises polyurethane.

13. The damper gas cup assembly (14) of claim 10, wherein the damper gas cup (34) includes a longitudinally-extending closed bottom portion (56) and a longitudinally extending open top portion (58), wherein the top portion (58) extends outward of the bottom portion (56), and wherein the top portion (58) includes the first surface groove (42).

14. The damper gas cup assembly (14) of claim 13, wherein the member (36) is substantially coaxially aligned with the longitudinal axis (38), surrounds the bottom portion (56), and contacts the top portion (58).

15. The damper gas cup assembly (14) of claim 10, wherein first surface groove (42) has an outwardly-facing first entrance (60), and wherein the first surface groove (42) completely surrounds the first seal (44) except at the first entrance (60).

16. The damper gas cup assembly (14) of claim 10, wherein second surface groove (48) has an outwardly-facing second entrance (62), and wherein the second surface groove (48) completely surrounds the second seal (50) except at the second entrance (62).

## Patentansprüche

1. Ein Dämpfer (10) aufweisend:
a) einen Dämpferzylinder (12), der einen geschlossenen Endabschnitt (26) und einen offenen Endabschnitt (28) aufweist;
b) eine schwebende Dämpfergasschalebaugruppe (14), die in dem Dämpferzylinder (12) angebracht ist und schiebend mit diesem eingreifen kann, um eine erste Kammer (30), die sich von der Dämpfergasschalebaugruppe (14) in Richtung des offenen Endabschnitts (28) erstreckt, und eine zweite Kammer (32), die sich von der Dämpfergasschalebaugruppe (14) in Richtung des geschlossenen Endabschnitts (26) erstreckt, zu bilden, wobei die Dämpfergasschalebaugruppe (14) folgendes enthält:
(1) eine gas- und flüssigkeitsundurchlässige Dämpfergasschale (34), die eine zentrale Längsachse (38) aufweist und eine nach außen hin gerichtete erste Umfangsfläche (40) mit einer vollumfänglichen ersten Flächenrille (42) aufweist, wobei die erste Flächenrille (42) zum Empfangen einer ersten Dichtung (44) eingerichtet ist; und
(2) ein flüssigkeitsundurchlässiges Element (36), das außerhalb der Dämpfergasschale (34) angebracht und an diesem befestigt ist und eine nach außen hin gerichtete zweite Umfangsfläche (46) mit einer vollumfänglichen zweiten Flächenrille (48) aufweist, wobei die zweite Flächenrille (48) zum Empfangen einer zweiten Dichtung (50) eingerichtet ist;
wobei die Dämpfergasschale (34) eine übergeformte Befestigung zu dem Element (36) hat und ein Plastik aufweist; und
wobei das Element (36) eins von einem porösen, gepulverten Metall und einer porösen Keramik aufweist;
c) ein dämpfendes Fluid (16), das innerhalb der ersten Kammer (30) und in Kontakt mit dem Element (36) angebracht ist;
d) ein Gas (18), das innerhalb der zweiten Kammer (32) und in Kontakt mit der Dämpfergasschale (34) angebracht ist;
e) eine Dämpferkolbenbaugruppe (20), die innerhalb der ersten Kammer (30) angebracht ist und schiebend mit dem Dämpferzylinder (12) eingreifen kann;
f) eine Kolbenstange (22) aufweisend einen ersten Endabschnitt (52), der an der Dämpferkolbenbaugruppe (20) befestigt ist, und einen zweiten Endabschnitt (54), der sich außerhalb des offenen Endabschnitts (28) des Dämpferzylinders (12) erstreckt; und
g) eine Stangenführungsbaugruppe (24), die an dem offenen Endabschnitt (28) des Dämpferzylinders (12) befestigt ist und zum Führen der Kolbenstange (22) und zum Abdichten des dämpfenden Fluids (16) innerhalb der ersten Kammer (30) eingerichtet ist.

2. Der Dämpfer (10) gemäß Anspruch 1, wobei die Dämpfergasschalebaugruppe (14) die erste Dichtung (44), die in der ersten Flächenrille (42) angebracht ist, und die zweite Dichtung (50), die in der zweiten Flächenrille (48) angebracht ist, aufweist, wobei die erste und zweite Dichtung (44 und 50) jeweils schiebend mit dem Dämpferzylinder (12) eingreifen kann.

3. Der Dämpfer (10) gemäß Anspruch 2, wobei das dämpfende Fluid (16) ein magnetorheologisches (MR) dämpfendes Fluid ist.

4. Der Dämpfer (10) gemäß Anspruch 3, wobei die erste Dichtung (44) Nitril-Butadien-Kautschuk aufweist, und wobei die zweite Dichtung (50) Polyurethan aufweist.

5. Der Dämpfer (10) gemäß Anspruch 3, wobei die Dämpfergasschale (34) einen sich in Längsrichtung erstreckenden geschlossenen Bodenabschnitt (56) und einen sich in Längsrichtung erstreckenden offenen Kopfabschnitt (58) aufweist, wobei der Kopfabschnitt (58) sich von dem Bodenabschnitt (56) nach außen hin erstreckt, und wobei der Kopfabschnitt (58) die erste Flächenrille (42) beinhaltet.

6. Der Dämpfer (10) gemäß Anspruch 5, wobei das Element (36) im Wesentlichen koaxial mit der Längsachse (38) ausgerichtet ist, den Bodenabschnitt (56) umschließt und den Kopfabschnitt (58) kontaktiert.

7. Der Dämpfer (10) gemäß Anspruch 2, wobei die erste Flächenrille (42) einen nach außen hin gerichteten ersten Eingang (60) aufweist, und wobei die erste Flächenrille (42) die erste Dichtung (44) bis auf bei dem ersten Eingang (60) komplett umschließt.

8. Der Dämpfer (10) gemäß Anspruch 2, wobei die zweite Flächenrille (48) einen nach außen hin gerichteten zweiten Eingang (62) aufweist, und wobei die zweite Flächenrille (48) die zweite Dichtung (50) bis auf bei dem ersten Eingang (62) komplett umschließt.

9. Eine Dämpfergasschalebaugruppe (14) aufweisend:
a) eine gas- und flüssigkeitsundurchlässige Dämpfergasschale (34), die eine zentrale Längsachse (38) aufweist und eine nach außen hin gerichtete erste Umfangsfläche (40) mit einer vollumfänglichen ersten Flächenrille (42) aufweist, wobei die erste Flächenrille (42) zum Empfangen einer ersten Dichtung (44) eingerichtet ist; und
b) ein flüssigkeitsundurchlässiges Element (36), das außerhalb der Dämpfergasschale (34) angebracht und an diesem befestigt ist und eine nach außen hin gerichtete zweite Umfangsfläche (46) mit einer vollumfänglichen zweiten Flächenrille (48) aufweist, wobei die zweite Flächenrille (48) zum Empfangen einer zweiten Dichtung (50) eingerichtet ist;
wobei die Dämpfergasschale (34) eine übergeformte Befestigung zu dem Element (36) hat und ein Plastik aufweist; und
wobei das Element (36) eins von einem porösen, gepulverten Metall und einer porösen Keramik aufweist.

10. Die Dämpfergasschalebaugruppe (14) gemäß Anspruch 9, aufweisend:
c) eine erste Dichtung (44), die in der ersten Flächenrille (42) angebracht ist; und
d) eine zweite Dichtung (50), die in der zweiten Flächenrille (48) angebracht ist.

11. Die Dämpfergasschalebaugruppe (14) gemäß Anspruch 10, aufweisend ein magnetorheologisches (MR) dämpfendes Fluid.

12. Die Dämpfergasschalebaugruppe (14) gemäß Anspruch 11, wobei die erste Dichtung (44) Nitril-Butadien-Kautschuk aufweist, und wobei die zweite Dichtung (50) Polyurethan aufweist.

13. Die Dämpfergasschalebaugruppe (14) gemäß Anspruch 10, wobei die Dämpfergasschale (34) einen sich in Längsrichtung erstreckenden geschlossenen Bodenabschnitt (56) und einen sich in Längsrichtung erstreckenden offenen Kopfabschnitt (58) aufweist, wobei der Kopfabschnitt (58) sich von dem Bodenabschnitt (56) nach außen hin erstreckt, und wobei der Kopfabschnitt (58) die erste Flächenrille (42) beinhaltet.

14. Die Dämpfergasschalebaugruppe (14) gemäß Anspruch 13, wobei das Element (36) im Wesentlichen koaxial mit der Längsachse (38) ausgerichtet ist, den Bodenabschnitt (56) umschließt und den Kopfabschnitt (58) kontaktiert.

15. Die Dämpfergasschalebaugruppe (14) gemäß Anspruch 10, wobei die erste Flächenrille (42) einen nach außen hin gerichteten ersten Eingang (60) aufweist, und wobei die erste Flächenrille (42) die erste Dichtung (44) bis auf bei dem ersten Eingang (60) komplett umschließt.

16. Die Dämpfergasschalebaugruppe (14) gemäß Anspruch 10, wobei die zweite Flächenrille (48) einen nach außen hin gerichteten zweiten Eingang (62) aufweist, und wobei die zweite Flächenrille (48) die zweite Dichtung (50) bis auf bei dem ersten Eingang (62) komplett umschließt.

## Revendications

1. Amortisseur (10) comprenant :
a) un cylindre amortisseur (12) ayant une partie d'extrémité fermée (26) et une partie d'extrémité ouverte (28),
b) un ensemble coupelle d'amortisseur à gaz flottante (14) disposé dans le cylindre amortisseur (12) de manière à pouvoir interagir par coulissement avec celui-ci pour créer une première chambre (30) qui s'étend à partir de l'ensemble coupelle d'amortisseur à gaz (14) vers la partie d'extrémité ouverte (28) et une seconde chambre (32) qui s'étend à partir de l'ensemble coupelle d'amortisseur à gaz (14) vers la partie d'extrémité fermée (26), l'ensemble coupelle d'amortisseur à gaz (14) incluant :
1) une coupelle d'amortisseur à gaz étanche aux gaz et aux liquides (34) présentant un axe longitudinal central (38) et une première surface circonférentielle orientée vers l'extérieur (40) avec une première rainure de surface entièrement circonférentielle (42), la première rainure de surface (42) étant adaptée à recevoir un premier joint (44), et
2) un élément perméable aux liquides (36) qui est disposé à l'extérieur et fixé à la coupelle d'amortisseur à gaz (34) et présente une seconde surface circonférentielle orientée vers l'extérieur (46) avec une seconde rainure de surface entièrement circonférentielle (48), la seconde rainure de surface (48) étant adaptée à recevoir un second joint (50),
la coupelle d'amortisseur à gaz (34) présentant une fixation surmoulée sur l'élément (36) et comprenant du plastique, et
l'élément (36) comprenant un parmi un métal poreux en poudre et une céramique poreuse,
c) un fluide d'amortissement (16) disposé à l'intérieur de la première chambre (30) et en contact avec l'élément (36),
d) un gaz (18) disposé dans la seconde chambre (32) et en contact avec la coupelle d'amortisseur à gaz (34),
e) un ensemble piston amortisseur (20) disposé à l'intérieur de la première chambre (30) de manière à pouvoir interagir par coulissement avec le cylindre amortisseur (12),
f) une tige de piston (22) présentant une première partie d'extrémité (52) fixée à l'ensemble piston amortisseur (20) et une seconde partie d'extrémité (54) s'étendant à l'extérieur de la partie d'extrémité ouverte (28) du cylindre amortisseur (12), et
g) un ensemble guide de tige (24) fixé à la partie d'extrémité ouverte (28) du cylindre amortisseur (12) et adapté à guider la tige de piston (22) et à enfermer le fluide d'amortissement (16) hermétiquement dans la première chambre (30).

2. Amortisseur (10) suivant la revendication 1, dans lequel l'ensemble coupelle d'amortisseur à gaz (14) inclut le premier joint (44) disposé dans la première rainure de surface (42) et le second joint (50) disposé dans la seconde rainure de surface (48), chacun des premier et second joints (44 et 50) pouvant interagir par coulissement avec le cylindre amortisseur (12).

3. Amortisseur (10) suivant la revendication 2, dans lequel le fluide d'amortissement (16) est un fluide d'amortissement magnétorhéologique (MR).

4. Amortisseur (10) suivant la revendication 3, dans lequel le premier joint (44) comprend du caoutchouc butadiène nitrile et le second joint comprend du polyuréthane.

5. Amortisseur (10) suivant la revendication 3, dans lequel la coupelle d'amortisseur à gaz (34) inclut une partie inférieure fermée s'étendant dans le sens longitudinal (56) et une partie supérieure ouverte s'étendant dans le sens longitudinal (58), la partie supérieure (58) s'étendant vers l'extérieur de la partie inférieure (56) et incluant la première rainure de surface (42).

6. Amortisseur (10) suivant la revendication 5, dans lequel l'élément (36) est aligné de manière essentiellement coaxiale avec l'axe longitudinal (38), entoure la partie inférieure (56) et est en contact avec la partie supérieure (58).

7. Amortisseur (10) suivant la revendication 2, dans lequel la première rainure de surface (42) présente une première entrée orientée vers l'extérieur (60) et entoure entièrement le premier joint (44), excepté au niveau de la première entrée (60).

8. Amortisseur (10) suivant la revendication 2, dans lequel la seconde rainure de surface (48) présente une seconde entrée orientée vers l'extérieur (62) et entoure entièrement le second joint (50), excepté au niveau de la seconde entrée (62).

9. Ensemble coupelle d'amortisseur à gaz (14) comprenant :
a) une coupelle d'amortisseur à gaz étanche aux gaz et aux liquides (34) présentant un axe longitudinal central (38) et une première surface circonférentielle orientée vers l'extérieur (40) avec une première rainure de surface entièrement circonférentielle (42), la première rainure de surface (42) étant adaptée à recevoir un premier joint (44), et
b) un élément perméable aux liquides (36) qui est disposé à l'extérieur et fixé à la coupelle d'amortisseur à gaz (34) et qui présente une seconde surface circonférentielle orientée vers l'extérieur (46) avec une seconde rainure de surface entièrement circonférentielle (48), la seconde rainure de surface (48) étant adaptée à recevoir un second joint (50),
la coupelle d'amortisseur à gaz (34) présentant une fixation surmoulée sur l'élément (36) et comprenant du plastique, et
l'élément (36) comprenant un parmi un métal poreux en poudre et une céramique en poudre.

10. Ensemble de coupelle d'amortisseur à gaz (14) suivant la revendication 9 comprenant :
c) un premier joint (44) disposé dans la première rainure de surface (42), et
d) un second joint (50) disposé dans la seconde rainure de surface (48).

11. Ensemble de coupelle d'amortisseur à gaz (14) suivant la revendication 10, l'ensemble comprenant un fluide d'amortissement magnétorhéologique (MR).

12. Ensemble de coupelle d'amortisseur à gaz (14) suivant la revendication 11, dans lequel le premier joint (44) comprend du caoutchouc butadiène nitrile et dans lequel le second joint (50) comprend du polyuréthane.

13. Ensemble de coupelle d'amortisseur à gaz (14) suivant la revendication 10, dans lequel la coupelle d'amortisseur à gaz (34) inclut une partie inférieure fermée s'étendant dans le sens longitudinal (56) et une partie supérieure ouverte s'étendant dans le sens longitudinal (58), la partie supérieure (58) s'étendant vers l'extérieur de la partie inférieure (56) et incluant la première rainure de surface (42).

14. Ensemble de coupelle d'amortisseur à gaz (14) suivant la revendication 13, dans lequel l'élément (36) est aligné de manière essentiellement coaxiale avec l'axe longitudinal (38), entoure la partie inférieure (56) et est en contact avec la partie supérieure (58).

15. Ensemble de coupelle d'amortisseur à gaz (14) suivant la revendication 10, dans lequel la première rainure de surface (42) présente une première entrée orientée vers l'extérieur (60) et entoure entièrement le premier joint (44), excepté au niveau de la première entrée (60).

16. Ensemble de coupelle d'amortisseur à gaz (14) suivant la revendication 10, dans lequel la seconde rainure de surface (48) présente une seconde entrée orientée vers l'extérieur (62) et entoure entièrement le second joint (50), excepté au niveau de la seconde entrée (62).
